(19) Europäisches Patentamt
European Patent Office
Office européen des brevets

(11) **EP 1 435 527 B1**

(12) **FASCICULE DE BREVET EUROPEEN**

(45) Date de publication et mention
de la délivrance du brevet:
**08.04.2009 Bulletin 2009/15**

(51) Int Cl.:
***G01V 1/28*** *(2006.01)*    ***G01V 11/00*** *(2006.01)*

(21) Numéro de dépôt: **03293007.5**

(22) Date de dépôt: **01.12.2003**

(54) **Méthode de modélisation pour constituer un modèle simulant le remplissage multilithologique d'un bassin sédimentaire**

Verfahren zur Erstellung eines Modells zur Simulation des multi-lithologischen Befüllung eines Sediment-Beckens

Method of establishing a model to simulate the filling of a multi-lithology sedimentary basin

(84) Etats contractants désignés:
**DE GB IT NL**

(30) Priorité: **20.12.2002 FR 0216456**

(43) Date de publication de la demande:
**07.07.2004 Bulletin 2004/28**

(73) Titulaire: **Institut Français du Pétrole
92852 Rueil-Malmaison Cedex (FR)**

(72) Inventeur: **Granjeon, Didier
92500 Rueil-Malmaison (FR)**

(56) Documents cités:
**US-A- 5 844 799**

• **RIVENEAS J C: "APPLICATION OF A DUAL-LITHOLOGY, DEPTH-DEPENDENT DIFFUSION EQUATION IN STRATIGRAPHIC SIMULATION" BASIN RESEARCH, BLACKWELL, OXFORD, GB, vol. 4, 1992, pages 133-146, XP000605803 ISSN: 0950-091X**
• **KENYON P M ET AL: "MORPHOLOGY OF A DELTA PROGRADING BY BULK SEDIMENT TRANSPORT" GEOLOGICAL SOCIETY OF AMERICA BULLETIN, vol. 96, 1 novembre 1985 (1985-11-01), pages 1457-1465, XP000605715 ISSN: 0016-7606**
• **LAWRENCE D T ET AL: "STRATIGRAPHIC SIMULATION OF SEDIMENTARY BASINS: CONCEPTS AND CALIBRATION" AAPG BULLETIN - THE AMERICAN ASSOCIATION OF PETROLEUM GEOLISTS BULLETIN, OKLA, US, vol. 74, no. 3, 1 mars 1990 (1990-03-01), pages 273-295, XP000605713**

EP 1 435 527 B1

## Description

La présente invention a pour objet une méthode pour réaliser un modèle pour simuler le remplissage sédimentaire de bassins sur des échelles de temps et d'espace importants.

La méthode selon l'invention concerne plus particulièrement la réalisation d'un modèle stratigraphique numérique permettant la simulation en deux ou trois dimensions (2D ou 3D) du remplissage multi-lithologique d'un bassin, dans le but de simuler la réponse stratigraphique du système sédimentaire à des variations au cours du temps de l'eustatisme, de la subsidence, des apports sédimentaires et des paramètres physiques régissant le transport des sédiments dans le bassin.

## ART ANTERIEUR

Les progrès récents en géologie, qui ont donné naissance au cours de ces vingt dernières années à la stratigraphie sismique, puis à la stratigraphie génétique, ont profondément modifié la compréhension de l'histoire du remplissage sédimentaire des bassins sur de grandes échelles de temps et d'espace en montrant l'influence primordiale de trois paramètres principaux: l'eustatisme, la tectonique et le flux sédimentaire.

De nombreux modèles et notamment des modèles numériques déterministes, ont été élaborés afin de pouvoir appréhender les implications géométriques et lithologiques de ces nouvelles approches.

Ces modèles numériques simulent le transport et la sédimentation (ou l'érosion) des sédiments dans le bassin en se basant sur une description plus ou moins complexe de la nature, à partir d'une estimation de l'eustatisme, de la subsidence et de l'apport sédimentaire. On rappelle que l'on désigne par eustatisme les variations de la surface des océans enregistrées simultanément sur l'ensemble de la surface terrestre, et par subsidence le déplacement absolu du fond d'un bassin sédimentaire par rapport à un niveau repère fixe au cours du temps. Ces modèles permettent ainsi de tester l'influence de différents concepts (relation entre le climat et l'eustatisme, etc.) sur l'agencement des unités sédimentaires. De plus, appliqués sur des cas réels, ils permettent de tester la cohérence des paramètres introduits dans le modèle tels que les variations eustatiques et tectoniques et de conforter l'interprétation géologique du bassin étudié.

On attend d'un modèle qu'il puisse définir les grandes tendances de variations de faciès (variation du rapport sable/argile, teneur en carbonate, etc.) au sein des unités génétiques. Pour ce faire, il est nécessaire de concevoir une modélisation multi-lithologique. Le modèle doit pouvoir simuler le transport et la sédimentation de différentes lithologies siliciclastiques (sable, argile, etc.) et carbonatées (récif, boue pélagique carbonatée, bioclastes, etc.) afin que ces tendances de variations de faciès soient un résultat du modèle, indépendant d'a priori géologique tel que plaine alluviale sableuse et domaine marin argileux. Dans ce modèle idéal, les sédiments siliciclastiques sont introduits dans le bassin par les fleuves et les courants marins, tandis que les carbonates sont produits en domaine marin en prenant en compte la bathymétrie, la turbidité de l'au, et l'action des vagues. Après avoir été introduits au niveau des frontières du bassin, ou produits dans le bassin, les sédiments sont transportés puis sédimentés.

Il existe trois grandes familles de modèle déterministe qui régissent le transport des sédiments:

- les modèles particulaires basés sur la résolution du mouvement des particules (calcul de l'écoulement de l'eau puis relation entre flux d'eau et flux de sédiments);

- les modèles diffusifs basés sur une équation de diffusion dans laquelle la définition du coefficient de diffusion est plus ou moins raffinée (prise en compte de plusieurs lithologies, du flux d'eau, de l'environnement de dépôt, etc.); et

- les modèles géométriques basés sur une définition du profil géométrique des environnements de dépôt (longueur et pente de la plaine alluviale, etc.) ou sur une définition géométrique du taux de sédimentation (décroissance exponentielle en domaine marin, etc.).

Les modèles particulaires utilisent une description soignée des processus sédimentaires et sont donc aussi chaotiques que la nature. Ils permettent essentiellement d'obtenir des simulations à l'échelle du réservoir (longueur de l'ordre de 0,5 à 50 km et durée de l'ordre de 5 à 500 ka). Les modèles diffusifs et géométriques fournissent tous deux des approximations plus ou moins grossières des processus naturels. Ils sont beaucoup plus stables que la réalité dont ils rendent compte; mais ils ne fournissent qu'une estimation lissée de la nature. Ces modèles sont applicables préférentiellement à l'échelle du bassin (longueur de l'ordre de 10 à 1000 km et durée de l'ordre de 0,1 à 100 Ma). Les modèles géométriques, basés sur une approximation de la morphologie des bassins, sont essentiellement applicables sur des cas simples en 2D dans lesquels la subsidence, nature des sédiments et le climat ne perturbent pas trop la définition du profil d'équilibre. Plus généraux, les modèles diffusifs, fondés sur une approximation de la physique des sédiments, sont applicables en 3D et peuvent traiter le transport et la sédimentation de multiples lithologies.

Différents modèles diffusifs connus sont décrits par exemple par:

- Kenyon et Turcotte, 1985, Morphology of a delta prograding by bulk sediment transport. in Geol. Soc. Amer. Bull., 96, 1457-1465.

- Begin, Z.B., 1988, Application of a diffusion - erosion model to alluvial channels which degrade due to base-level lowering. Earth Surface Processes and Landforms, 13, 487-500.

- Rivenaes, J.C., 1988, Application of a dual-lithology, depth dependent diffusion equation in stratigraphic simulation. Basin Research, 4, 133-146.

Un avantage des modèles diffusifs est de permettre un retour vers les concepts géologiques en quantifiant certaines relations telles que la durée variable des phases de progradation et de rétrogradation des unités génétiques, ou l'évolution de la sablosité en fonction soit de la bathymétrie, soit de la tendance progradante ou rétrogradante du littoral.
Les modèles antérieurs ont essentiellement pour but une expérimentation numérique de concepts théoriques le long de profils en 2D.
La méthode concerne la réalisation d'un modèle déterministe numérique de type diffusif permettant la simulation en 2D ou 3D du remplissage des bassins sédimentaires par des sédiments siliclastiques et carbonatés.
Par le brevet FR 2 744 224 du demandeur, on connaît une méthode pour simuler le remplissage d'un bassin sédimentaire. A partir de données connues sur l'architecture d'un bassin et de données de mesures : diagraphies de puits, campagnes sismiques, etc., on constitue un ensemble de données d'entrée portant sur l'espace disponible créé par subsidence et eustatisme, sur l'apport et la production de sédiments fluviatiles ou marins, et sur des paramètres physiques de transport tels que des coefficients de diffusion des différentes lithologies. Cet ensemble de données est appliqué à un modèle numérique. Les résultats que l'on peut en déduire sur la géométrie et les lithologies des unités sédimentaires, sont confrontés avec les données de mesure et, de proche en proche, par inversion, on affine les données d'entrée.

## LA METHODE SELON L'INVENTION

La méthode de modélisation selon la revendication 1 permet de constituer un modèle déterministe de type diffusif (en 2D ou 3D) qui simule le remplissage multi-lithologique d'un bassin sédimentaire.
La méthode comporte par exemple :

- une modélisation des flux à long terme de sédiments transportés par l'eau en tenant compte d'un modèle de répartition des flux d'eau sur le bassin et de la capacité de transport des sédiments par de tels flux ;

- une modélisation des flux à court terme de sédiments transportés par l'eau en utilisant un modèle exponentiel pour estimer la vitesse de l'eau ;

- une modélisation des flux catastrophiques transportés par l'eau dans des zones instables repérées en appliquant un critère de pente critique.

Le modèle diffusif obtenu par la méthode permet d'appréhender en 3D le remplissage multi-lithologique d'un bassin. Afin de l'appliquer dans un contexte industriel, une méthodologie d'inversion des paramètres est utilisée. Une analyse des données disponibles, telles que des données de puits ou de sismiques, permet d'estimer un premier jeu de paramètres (eustatisme, subsidence, apports, etc.) requis par le modèle. Le modèle diffusif est alors utilisé pour obtenir une première simulation du bassin. Cette simulation est comparée aux données. Les paramètres sont alors modifiés afin de réduire les écarts entre données et simulation. Cette boucle d'inversion (simulation - comparaison-modification) est poursuivie et permet un affinement progressif de la quantification de chaque paramètre. A la fin de cette boucle d'inversion, l'utilisateur du modèle dispose ainsi d'une simulation calée sur les données disponibles, mais également d'un ensemble de paramètres physiques améliorant sa connaissance du bassin étudié.
La modélisation étant effectuée de façon détaillée selon les types de transport, on obtient une distribution plus précise des sédiments à l'intérieur de chaque géométrie et aussi une quantification plus fine de chacun d'eux.
Les principales applications du modèle diffusif et de sa boucle d'inversion selon l'invention sont :

- la quantification des paramètres physiques et géologiques (eustasie, subsidence, localisation des sources de sédiments, paramètres de transport, etc.) pour différents modèles géologiques, ce qui permet :

  - de tester la cohérence de différents modèles géologiques ;

- de déterminer le meilleur schéma de corrélation entre différents puits ; et

- de déterminer la meilleure interprétation de données sismiques ;

- la reconstitution de l'évolution au cours du temps de la stratigraphie d'un bassin sédimentaire, ce qui permet en particulier :

- d'estimer l'extension et la connectivité des différentes unités sédimentaires ; ou

- d'estimer la distribution régionale des faciès sédimentaires.

En exploration, le modèle ainsi formé permet d'identifier les régions potentiellement les plus intéressantes, grâce à la localisation et à la caractérisation des couches sédimentaires contenant les roches mères, les drains, les réservoirs et/ou les couvertures. Les ingénieurs de réservoir peuvent de plus, à partir du modèle, déterminer les propriétés pétrophysiques d'un réservoir étudié (porosité moyenne et perméabilité) et sélectionner les zones de production les plus prometteuses.

## PRESENTATION SUCCINCTE DES FIGURES

Les caractéristiques et avantages de la méthode selon l'invention, apparaîtront plus clairement à la lecture de la description ci-après d'un exemple non limitatif de réalisation, en se référant aux dessins annexés où :

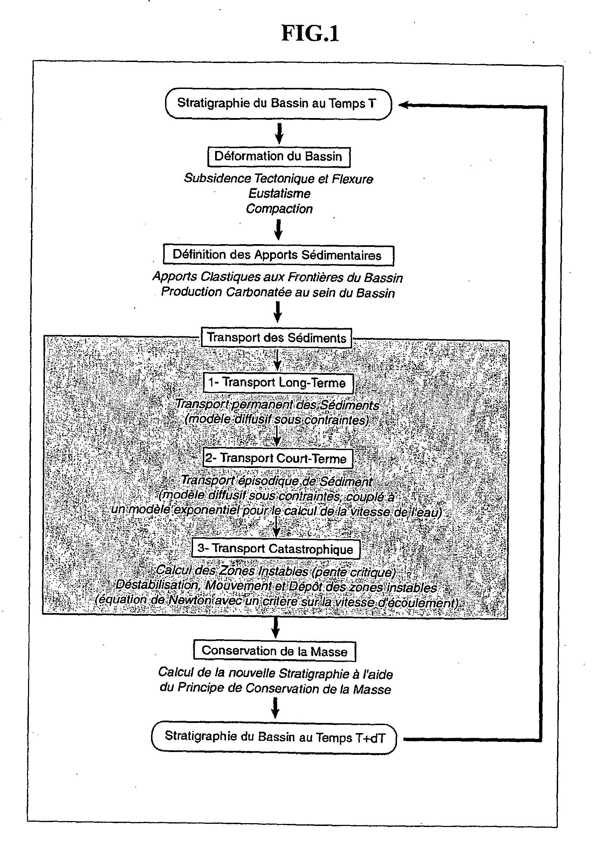

- la figure 1 montre un organigramme de la méthode permettant de modéliser par itérations successives, la stratigraphie d'un bassin ;

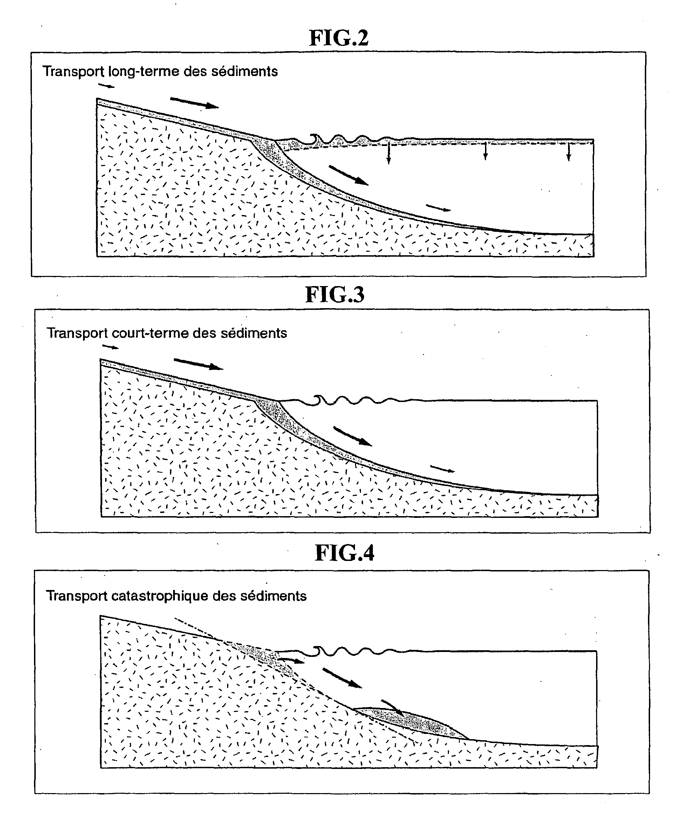

- la figure 2 illustre le mode de transport à long terme (permanents) des sédiments induits par les fleuves, les courants marins, ou l'action lente de la gravité (reptation, etc.) ; il est simulé à l'aide d'un modèle diffusif, contraint par le flux d'eau et une disponibilité réduite ; dans le domaine marin, la fraction fine des sédiments (composante argileuse), est d'abord transportée par suspension, puis remaniée par les processus à long terme agissant sur le fonds marin.

- la figure 3 illustre le mode de transport à court terme des sédiments lors de phénomènes épisodiques mais intenses, tels que des pluies importantes induisant des crues fluviales et des courants hyperpycnaux en domaine marin ; ces processus sont modélisés à l'aide d'un modèle diffusif, contraint par le flux d'eau, la disponibilité réduite et la vitesse de l'eau; cette vitesse de l'eau étant calculé à l'aide d'un modèle exponentiel ; et

- la figure 4 illustre le mode de transport en masse ou catastrophique des sédiments suite à des éboulements de falaise ou de pente ; dans un premier temps, on détermine les zones instables à l'aide d'un critère sur la pente du sol ; tout sédiment situé au dessus d'une pente critique est considéré comme instable ; on le détache du sol, et on le déplace à l'aide de l'équation de Newton (Accélération = Gravité - Friction), tant que sa vitesse est supérieure à une vitesse critique.

## DESCRIPTION DETAILLEE DE LA METHODE

La méthode de modélisation selon l'invention permet d'obtenir une simulation stratigraphique déterministe sur de grandes durées (de l'ordre de la dizaine de milliers à quelques millions d'années), et sur de grandes distances (quelques dizaines à centaines de kilomètres), en 3D.
On va considérer ici que les sédiments présents dans le bassin étudiés peuvent être définis à l'aide de lithologies de base. Une lithologie correspond à une classe granulométrique et une nature de grains. On distingue ainsi par exemple des sables grossiers, des argiles fines, des carbonates moyens, etc.
Comme le montre l'organigramme de la Fig.1, la modélisation stratigraphique du bassin est obtenu itérativement du passé jusqu'au présent (ou au moins jusqu'à un temps plus récent ), en une série de pas de temps constant, de l'ordre de la dizaine à la centaine de milliers d'années. Au cours de chaque pas de temps, le modèle stratigraphique calcule la déformation du bassin et les apports de chaque lithologie, puis quantifie le transport de chacune des lithologies L'application de la conservation de la masse permet d'obtenir une nouvelle géographie, et termine ainsi le pas de temps.
Dans une première étape, on définit l'espace disponible aux sédiments. Ensuite, on introduit les sédiments, et on simule la production sédimentaire dans le bassin. Puis on répartit ces sédiments en accord avec des lois de macro transport qui seront définis dans la suite de la description en limitant l'érosion à la couche d'altération.

I) La création de l'espace disponible

L'espace disponible pour le remplissage sédimentaire du bassin, est la somme de l'eustatisme et de la subsidence. On a choisi de le définir point par point, soit à partir de courbes eustatiques et de cartes de subsidence, soit directement à partir de cartes d'accommodation, sans utiliser donc de modèles physiques reliant l'eustatisme au climat, ou la subsidence à des processus tectoniques, isostatiques ou thermiques.

Bien que ne modifiant pas l'espace disponible, la compaction influe sur le remplissage sédimentaire en modifiant l'épaisseur des couches sédimentaires. Pour rendre compte de la compaction mécanique, on a choisi de relier directement la porosité des sédiments à l'enfouissement maximal atteint par eux, par une relation de forme exponentielle qui permet d'obtenir une bonne approximation de la compaction telle que définie par

■ Parasnis, D.S., 1960, The compaction of sédiments and its bearing on some geophysical problems. Journal of the Royal Astronomical Society, v.3, n. 1, pp. 1-28.

Pour tenir compte du cas de sédiments multi-lithologiques, on a considéré que chaque lithologie a une porosité indépendante des autres, ce qui revient à assimiler les couches sédimentaires composées d'un mélange de plusieurs lithologies telles que le sable et l'argile à une superposition de multiples sous-couches composées de lithologies pures. La porosité liée à chaque lithologie est ainsi traitée individuellement en fonction de l'enfouissement maximal atteint par la couche sédimentaire.

$$\text{pour chaque lithologie } i \quad \Rightarrow \quad \Phi_i = \Phi_{r,i} + \left(\Phi_{o,i} - \Phi_{r,i}\right) e^{-z/z_i}$$

$$\text{avec} \begin{cases} \Phi_i & \text{porosité de la lithologie i (en \%)} \\ \Phi_{r,i} & \text{porosité résiduelle de la lithologie i (en \%)} \\ \Phi_{o,i} & \text{porosité de dépôt de la lithologie i (en \%)} \\ z & \text{enfouissement maximale atteint par la couche sédimentaire étudiée (en m)} \\ z_i & \text{enfouissement de référence de la lithologie i (en m)} \end{cases}$$

Cette définition d'une porosité liée aux lithologies permet en particulier de simuler le transport individuel de chaque lithologie et d'en déduire les conséquences sur la porosité des couches sédimentaires.

II) L'introduction et la production de sédiments

L'espace disponible ayant été créé, la deuxième étape de formation du modèle recherché consiste à introduire des sédiments dans le bassin, ou à les produire à l'intérieur du domaine marin.

*a) L'introduction de sédiments dans le domaine d'étude*

Les flux de sédiments aux frontières du domaine étudié représentent géologiquement l'apport sédimentaire responsable du remplissage du bassin. Ils peuvent être perçus physiquement en termes de conditions limites du flux de sédiments.

On fixe ces conditions limites soit en imposant la valeur exacte du flux en un secteur de la frontière, soit encore en imposant au flux de sédiments d'avoir une évolution continue. Le premier cas représente une zone d'apport imposée par des conditions externes au bassin tels que le débouché d'un fleuve drainant un bassin versant extérieur au bassin. Le deuxième cas représente une zone libre le long de laquelle le flux de sédiments est régi par des paramètres physiques internes au bassin tels que les caractéristiques des vagues. Lors de la simulation d'un bassin, il est possible de combiner ces deux types de conditions limites, en distinguant par exemple une zone continentale où le flux est imposé par les apports fluviaux externes et une zone marine où le flux est défini par les lois de transport interne.

*b) La production sédimentaire à l'intérieur du domaine d'étude*

Les sédiments peuvent également être produits à l'intérieur du bassin, et plus particulièrement dans le cas de sédiments carbonatés. Pour cette phase de la construction du modèle selon l'invention, on a choisi de simuler cette production à l'aide d'une formule empirique reliant le taux de production en chaque point du bassin à la bathymétrie et aux flux de sédiments telle que définie par exemple par :Lawrence et al., 1990, Stratigraphic simulation of sedimentary basins: concepts and calibration in Amer. Assoc. Petrol. Geol. Bull., 74, 3, 273-295.

$$\text{pour chaque lithologie } i \quad \Rightarrow \quad \boxed{P_i = P_{o,i} \; B_i \prod_{j \neq i} F_{j,i}}$$

$$avec \begin{cases} P_i & \text{taux de production de la lithologie i (en m/s)} \\ P_{o,i} & \text{taux de production maximal de la lithologie i (en m/s)} \end{cases}$$

$$\text{influence de la bathymétrie} \quad B_i = \begin{cases} 0 & \text{si } b \leq 0 \\ \dfrac{b}{b_i} & \text{si } 0 < b \leq b_i \\ e^{-\beta_i(b-b_i)} & \text{si } b > b_i \end{cases} \qquad \begin{cases} B_i & \text{influence de la bathymétrie (adimensionnelle)} \\ b & \text{bathymétrie (en m)} \\ b_i & \text{seuil bathymétrique (en m)} \\ \beta_i & \text{coefficient d'atténuation (en m}^{-1}\text{)} \end{cases}$$

$$\text{influence de la lithologie } j \quad F_{j,i} = \begin{cases} 1 & \text{si } Q_j \leq S_{j,i} \\ e^{-\gamma_{j,i}(Q_j - S_{j,i})} & \text{si } Q_j > S_{j,i} \end{cases} \qquad \begin{cases} F_{j,i} & \text{sensibilité de la lithologie i au flux de la lithologie j} \\ Q_j & \text{flux de la lithologie j (en m}^2/s) \\ S_{j,i} & \text{seuil de début d'inhibition (en m}^2/s) \\ \gamma_{j,i} & \text{coefficient de sensibilité (en m}^{-2}.s) \end{cases}$$

Afin de prendre en compte l'érosion des récifs lorsque ceux-ci sont émergés, le processus d'altération mécanique de ces récifs a été simulé en considérant que tout sédiment récifal situé dans la couche d'altération en domaine continental est transformé en sédiment "bioclastique". Les lithologies récifales et bioclastiques sont transportées dans le bassin à l'instar des sédiments siliciclastiques.

III) Le transport des sédiments

*a) Le transport sur le long terme*

Les processus à long terme correspondent au transport permanent des sédiments, induits par les fleuves, les courants marins (figure 2), ou l'action lente de la gravité (reptation, etc.). Dans le cadre de la méthode, nous considérons que ces processus peuvent être modélisés par un équation de diffusion, contrainte par le flux d'eau et par une disponibilité réduite.

Nous commençons par définir la valeur du flux d'eau Qeau en chaque point M du bassin. Ce calcul se fait de l'amont vers l'aval, en supposant que toute l'eau arrivant en un point donné du bassin est redistribué vers les voisins en aval de ce point, au prorata de la pente ; le voisin ayant la pente la plus forte recevra ainsi plus d'eau que les autres.

Dans un deuxième temps, nous calculons la capacité de transport long terme en tout point M du bassin. Cette capacité de transport est définie par un modèle diffusif contraint par le flux d'eau, c'est-à-dire que la capacité de transport de chaque lithologie est définie par la formule suivante :

$$\overrightarrow{Q_{\text{max, litho}}} = -\left(K_{\text{gravité}} + K_{\text{fluviale}} \, Q_{\text{eau}}\right) \overrightarrow{\text{grad}} \, z$$

avec :

- Qmax, litho, la capacité de transport de la lithologie « litho » en M ;

- Qeau, le flux d'eau s'écoulant à la surface du sol en M ;

- Kgravité, le coefficient de diffusion lié aux processus gravitaires permanents (reptation du sol, etc.) ;

- Kfluviale, le coefficient de diffusion lié au transport fluvial et océanique permanent ;

- z, l'altitude du sol en M.

Pour définir le flux réel Qlitho de chaque lithologie transporté au niveau du point M, nous parcourons le bassin d'amont en aval. En chaque point M de ce parcours, nous connaissons ainsi le flux réel de chaque lithologie fournit par l'amont (étant donné que nous avons précédemment calculé ce qui se passait en amont du point M).

Nous considérons de plus que localement, l'érosion ne peut excéder une valeur maximale E, définie par la teneur en lithologie dans le sol (un récif carbonaté s'érodera ainsi moins vite qu'une argile indurée, qui s'érodera moins vite qu'un grès, etc.), et par la bathymétrie (l'érosion étant différente en milieu aérien et sous-marin).

Nous calculons le flux réel « sortant » en aval du point M en considérant que ce flux ne peut pas dépasser la capacité de transport maximale en aval de M, et ne peut pas dépasser la disponibilité maximale en sédiment, définie comme étant la somme du flux « entrant » en amont et de l'érosion maximale. Nous avons ainsi :

$$Q_{litho} = \min\left(Q_{litho\ amont} + E_{litho}\ ;\ Q_{max,litho\ aval}\right)$$

Nous supposons de plus que le flux reste diffusif, c'est-à-dire qu'il suit la plus grande pente. Nous pouvons définir ainsi un coefficient pondérateur $\lambda$, compris entre 0 et 1, tel que :

$$\overrightarrow{Q_{litho}} = \lambda \overrightarrow{Q_{max,\ litho}} = -\lambda\left(K_{gravité} + K_{fluviale}\ Q_{eau}\right)\overrightarrow{grad}\ z$$

*b) Le transport sur le court terme*

Les processus court termes correspondent (figure 3) au transport des sédiments lors de phénomènes épisodiques mais intenses, tels que les pluies importantes induisant des crues fluviales et des courants hyperpycnaux en domaine marin. Dans le cadre de cette invention, nous considérons que ces processus peuvent être modélisés par un équation de diffusion améliorée, contrainte par le flux d'eau, par une disponibilité réduite, et par la vitesse de l'écoulement de l'eau.

Un tel transport épisodique de sédiment a depuis fort longtemps été très étudié pour des problèmes d'ingénierie fluviale, côtière et marine. Le but de ces études est généralement de déterminer la capacité de transport d'un courant d'eau, afin de savoir si les installations humaines, telles que des maisons, des ponts, des ports ou des plate-formes marines, résisteront à un tel courant. On admet généralement qu'un cours d'eau peut être caractérisé par trois grandeurs principales : sa vitesse u, sa profondeur h, et sa largeur w. On admet de plus généralement que les équations de Saint-Venant, correspondant à la formulation pour un fluide de l'équation de Newton (somme des forces = accélération), permet de déterminer ces caractéristiques en tout point d'un écoulement. Les équations de Saint Venant se présentent en 2D sous la forme simplifiée suivante :

$$\begin{cases} \text{conservation du volume d'eau} & \dfrac{d\,h}{d\,t} = \dfrac{\partial\,h}{\partial\,t} + \dfrac{\partial\,u\,h}{\partial\,x} = 0 \\[3mm] \text{quantité de mouvement et bilan des forces} & \dfrac{d\,u\,h}{d\,t} = \dfrac{\partial\,u\,h}{\partial\,t} + \dfrac{\partial\,u^2\,h}{\partial\,x} = g\,h\,S - C\,u^2 \end{cases}$$

où S représente la pente de la surface du sol, et C le coefficient de friction de l'eau contre le sol.

La résolution de ces équations sur de très grandes durées (dizaines à centaines de milliers d'années), et sur de très grandes distances (dizaines à centaines de kilomètres), posent des problèmes numériques énormes pour une application pratique. Le principal problème est le temps de calcul nécessaire pour résoudre ces équations. Il peut se chiffrer en jours pour un pas de temps. Une simulation stratigraphique durerait ainsi des semaines.

Pour lever cet obstacle rédhibitoire, la méthode proposée permet de simplifier grandement le calcul de la vitesse de l'eau.

A cet effet, nous considérons dans un premier temps qu'un régime d'équilibre existe virtuellement. Ce régime d'équilibre est défini par la solution permanente uniforme des équations ci-dessus. Nous pouvons ainsi définir une vitesse d'équilibre Ue, une hauteur d'équilibre He, et une distance d'équilibre Le, par :

$$U_e = \left(\frac{Q_{eau}\ g\,S}{C}\right)^{1/3}$$

$$H_e = \frac{Q_{eau}}{U_e} = \left(\frac{C\,Q_{eau}^2}{g\,S}\right)^{1/3}$$

$$L_e = \frac{Q_{eau}}{3\,U_e\,C} = \frac{H_e}{3\,C}$$

Nous considérons dans un second temps que la vitesse d'un cours d'eau essaye en tout point de rejoindre sa vitesse d'équilibre. Cette tendance d'évolution est supposée suivre un modèle exponentiel :

$$\frac{\partial\,U(M)}{\partial\,\xi} = \frac{U_e}{L_e}$$

où $\xi$ la distance le long de l'écoulement.

Dans le cas où la vitesse et la distance d'équilibre restent sensiblement uniforme entre un point de référence et le point M, la relation ci-dessus aboutit au modèle exponentiel suivant :

$$U(M) = U_e + (U_o - U_e)\,e^{-\xi/L_e}$$

où Uo représente la vitesse au niveau d'un point de référence de l'écoulement.

Nous considérons en outre que la vitesse de l'eau agit comme un pondérateur P(U) du modèle de vitesse, suivant la relation suivante :

$$\overrightarrow{Q_{max,\,litho}} = -\left(K_{gravité} + K_{fluviale}\,Q_{eau}\,P(U)\right)\overrightarrow{grad}\,z$$

avec

$$P(U) = \left(\frac{U^2 - U^2_{c,litho}}{U^2_e}\right)^{3/2} \quad si \quad U > U_{c,litho}$$

et

$$P(U) = 0 \quad si \quad U < U_{c,litho}$$

où P(U) est le coefficient pondérateur, fonction de la vitesse U de l'écoulement, de la vitesse critique Uc,litho à partir de laquelle la lithologie 'litho » peut être transportée, et de la vitesse d'équilibre Ue.

Nous appliquons finalement la règle de disponibilité donnée plus haut au sujet du transport long terme pour contraindre et quantifier le flux réel de sédiment transporté par un courant épisodique d'eau.

*c) Le transport catastrophique*

Les processus catastrophiques correspondent au transport en masse de sédiments suite à des éboulements de falaise ou de pente. Dans un premier temps, nous déterminons les zones instables en appliquant un critère de pente critique. Cette pente critique varie localement et dépend de la nature lithologique des sédiments dans le sol.

Toute zone instable est ensuite déplacée en masse, en appliquant l'équation de Newton : l'accélération de l'éboulement est égale à la somme des forces s'appliquant sur l'éboulement (la gravité et la friction). Cette équation nous permet de mouvoir chaque éboulement à travers le bassin. Nous considérons que l'éboulement se fige dès que sa vitesse décroît en dessous d'un seuil critique.

*d) Résolution numérique*

La réalisation du modèle selon l'invention comporte la résolution numérique des équations de transport basée sur une discrétisation spatiale du bassin étudié, et une discrétisation temporelle de la formation.

Le bassin étudié est décomposé en mailles carrées de taille constante, tandis que le remplissage de ce maillage est simulé au niveau d'une succession de temps de calcul, séparés par un pas de temps constant. La largeur des mailles est par exemple de l'ordre de 1 à 10 kilomètres en fonction du bassin simulé, tandis que le pas de temps est de l'ordre de 50 000 ans.

Les équations de transport sont ensuite résolues à l'aide d'un schéma numérique explicite où les paramètres physiques tels que le flux ou l'altitude au temps (n+1) sont exprimés en fonction de paramètres mesurées au temps (n) et dont les valeurs sont ainsi connues.

Dans le cas monolithologique en deux dimensions, cette résolution s'écrit ainsi de la manière suivante.

$$(1) \; Q = -K \frac{\partial h}{\partial x} \quad \Rightarrow \quad \text{en chaque maille i} \quad Q_i^{(n+1)} = -K_i^{(n)} \frac{h_{i+1}^{(n)} - h_i^{(n)}}{dx}$$

$$(2) \frac{\partial h}{\partial t} = -\frac{\partial Q}{\partial x} \quad \Rightarrow \quad \text{en chaque maille i} \quad \frac{h_i^{(n+1)} - h_i^{(n)}}{dt} = -\frac{Q_i^{(n+1)} - Q_{i-1}^{(n+1)}}{dx}$$

*soit*

$$h_i^{(n+1)} = h_i^{(n)} + \frac{dt}{dx^2} \left( K_i^{(n)} \frac{h_{i+1}^{(n)} - h_i^{(n)}}{dx} - K_i^{(n)} \frac{h_i^{(n)} - h_{i-1}^{(n)}}{dx} \right)$$

$$avec \begin{cases} h_i^{(n)} & \text{altitude de la maille } i \text{ et au temps } n \text{ (en m)} \\ K_i^{(n)} & \text{coefficient de diffusion au niveau de la maille } i \text{ (en m}^2/\text{s)} \\ Q_i^{(n)} & \text{flux de sédiments entre les mailles } i \text{ et } i+1 \text{ (en m}^2/\text{s)} \\ dt & \text{pas de temps (en s)} \\ dx & \text{largeur des mailles (en m)} \end{cases}$$

Cette écriture assez simple devient cependant plus complexe lors du passage en multi-lithologie et en 3D, et lors de la prise en compte de la restriction du transport des sédiments à la couche altérée. Dans un tel cas, on écrit que:

$$\frac{\partial h}{\partial t} = -V_i \max,$$

soit

$$h_i^{(n+1)} = h_i^{(n)} - V_i . dt$$

La résolution explicite par volumes finis est la méthode de calcul la plus rapide à mettre en oeuvre. Elle fournit de plus des résultats très précis si on reste dans le domaine de stabilité de l'algorithme, ce qui nécessite des pas de temps de calcul internes très petits, de l'ordre du siècle au millénaire.

L'application du modèle aux données d'entrée formées à partir des données de champ, permet de simuler le transport des sédiments sur tout le bassin étudié. La validité de la simulation est ensuite testée en confrontant les résultats fournis par le modèle aux données collectées sur le terrain et principalement aux épaisseurs de sédiments et aux facies observés sur les diagraphies de puits. En cas de désaccord, on cherche par inversion le jeu de paramètres d'entrée du modèle: espace disponible et quantité de sédiments transportés, tel que l'écart entre les résultats obtenus par ces paramètres et les contraintes imposées soit minimale, tel que schématisé ci-après

$$\text{modèle direct} \implies S = M(p)$$

$$\text{fonction écart} \implies E(p) = \|S - C\|$$

$$\text{avec} \begin{cases} p & \text{ensemble des paramètres d'entrée du modèle} \\ M & \text{ensemble des équations régissant le modèle} \\ S & \text{ensemble des résultats en sortie du modèle} \\ C & \text{ensemble des contraintes géologiques} \\ E & \text{fonction d'écart entre les résultats et les contraintes} \\ \|.\| & \text{mesure de l'écart entre les résultats et les contraintes} \end{cases}$$

$$\text{inversion} \implies \text{trouver } \tilde{p} \text{ tel que}$$

$$\tilde{E} = E(\tilde{p}) \text{ soit le minimum absolu de la fonction } E$$

$$\forall p, \quad E(p) \geq \tilde{E}$$

Dans le cadre de la présente méthode, l'inversion a ainsi pour but de quantifier en particulier les valeurs de l'accommodation, des apports sédimentaires et des coefficients de diffusion afin d'obtenir une simulation dont les géométries des corps sédimentaires, les épaisseurs et les faciès mesurés au droit des puits de calage soient le plus près possible des contraintes géologiques.

On utilise une méthode d'inversion de type essais et erreurs. On définit un jeu de paramètres initial. On calcule la solution du modèle liée à ces paramètres, et on modifie la valeur des paramètres en fonction de l'écart entre la solution et les contraintes géologiques. On continue ce procédé jusqu'au moment où l'écart devient suffisamment faible.

L'optimum de concordance étant atteint, la simulation conduit à des données quantitatives sur la géométrie du bassin et sur les lithologies des unités sédimentaires. Elle permet aussi de vérifier la cohérence du schéma de corrélation des puits.

IV) Validation industrielle du modèle obtenu:

La validité du modèle ainsi constitué a été testée sur des cas théoriques simples à deux ou trois dimensions. On a supposé constants par exemple la vitesse de subsidence, le taux d'apport sédimentaire et la diffusivité des sédiments. En définissant l'eustatisme suivant un ou deux ordres de cyclicités, on a ainsi pu montrer à l'aide de ces cas simples mais réalistes que le modèle diffusif permet de restituer les implications des concepts de la stratigraphie génétique, telles que le partitionnement volumétrique des sédiments au sein d'une unité génétique et la distorsion des unités génétiques. La cohérence géologique des résultats de ces simulations permet de valider empiriquement l'utilisation de l'équation de diffusion multi-lithologique sur de grandes échelles de temps et d'espace.

Le modèle a été testé aussi sur des cas réels actuels et anciens, dans différents contextes sédimentaires, dans le cadre de thèses et de projets en collaboration avec des compagnies pétrolières. Les tests ont notamment été effectués sur :

(1) des systèmes siliciclastiques (sable, argile, ...) dans des environnements deltaïque à marin peu profond (bathymétrie < 200 m) :

- la formation du Mesa Verde, du bassin de San Juan dans le Colorado aux USA (longueur du bassin = 200 km, durée de la formation étudiée = 10 Ma) ;

- la formation du Brent, en Mer du Nord (surface du bassin = 250 x 350 km$^2$, durée de la formation étudiée = 12 Ma) ;

- les formations Tertiaire et Quaternaire, à l'embouchure du Fleuve Rouge au Vietnam (surface du bassin = 120 x 90 km$^2$, durée de la formation étudiée = 30 Ma) ;

- les formations du Secondaire au Quaternaire, du bassin du Colorado, au large de l'Argentine (surface du bassin = 200 x 200 km$^2$, durée de la formation étudiée = 240 Ma) ;

(2) des systèmes siliciclastiques (sable, argile, ...) turbiditiques dans des environnements marins peu profonds à très profonds (bathymétrie pouvant atteindre 1000 m):

- la formation du Pab, au Pakistan (surface du bassin = 90 x 110 km$^2$, durée de la formation étudiée = 3 Ma) ;

- la formation d'âge Eocène, le long de la marge brésilienne (surface du bassin = 40 x 80 km$^2$, durée de la formation étudiée = 15 Ma) ;

- la formation d'âge Eocène des Grès d'Annot, dans le sud de la France (surface du bassin = 20 x 40 km$^2$, durée de la formation étudiée = 15 Ma) ;

(3) des systèmes carbonatés purs (récifs de coraux et de rudistes, boues pélagiques, ...) dans des environnements marins peu profond :

- la formation du Natih, en Oman (surface du bassin = 200 x 200 km$^2$, durée de la formation étudiée = 10 Ma) ;

- la formation du Khuf, en Arabie Saoudite (surface du bassin = 250 x 250 km$^2$, durée de la formation étudiée = 50 Ma) ;

- les formations du Tortonien et Messinien, constituant les iles des Baléares (surface du bassin = 80 x 108 km$^2$, durée de la formation étudiée = 6 Ma) ;

- des systèmes carbonatés mixtes (sable et argile venant interagir avec des récifs de coraux et de rudistes, boues pélagiques, etc.) dans des environnements marins peu profond :

- la formation Miocène, en Turquie (surface du bassin = 40 x 40 km$^2$, durée de la formation étudiée = 5 Ma) ;

- les formations du Crétacé inférieur, en Oman (surface du bassin = 100 x 200 km$^2$, durée de la formation étudiée = 17 Ma).

Ces applications ont permis de montrer que le modèle diffusif présenté dans le cadre de cette invention permet d'obtenir des simulations très précises, avec un écart moyen des épaisseurs cumulées des sédiments de l'ordre de 5 mètres à 25 kilomètres des puits de contraintes (pour une formation ayant une épaisseur moyenne de l'ordre de 100 mètres), et un écart entre la position des rivages simulés et observés inférieur à 10 kilomètres (la taille des mailles de calcul étant de 10 kilomètres).

Du fait de cette restitution géométrique et faciologique, et de l'accès à la physique à grandes échelles des processus sédimentaires, le modèle diffusif selon l'invention permet de nouveau un retour sur les bases de données géologiques en affinant par exemple la valeur des bathymétries et des flux de sédiments, en restituant l'évolution de l'accommodation au cours du temps, et en confirmant ou en infirmant le choix d'un schéma de corrélation.

**Revendications**

1. Méthode pour constituer un modèle déterministe de type diffusif permettant de simuler le remplissage multi-lithologique d'un bassin sédimentaire, comportant, à partir de données de terrain connues relatives à l'architecture du bassin et à des données de mesure telles que des données de diagraphie de puits ou des données sismiques, la constitution d'un ensemble de données d'entrée portant sur un espace disponible par subsidence et eustatisme, sur l'apport de sédiments fluviatiles ou marins et leur transport, et sur des paramètres physiques tels que des coefficients de diffusion des différentes lithologies, par un processus itératif incluant le maillage du bassin en mailles de dimensions régulières, une modélisation suivant un schéma explicite en volumes finis avec des pas de temps constants, de façon à simuler le flux de chaque lithologie déposée sur chaque maille, une comparaison des résultats de la simulation aux données de terrain et la modification par inversion et de proche en proche des données d'entrée, **caractérisée en ce que,** à chaque pas de temps et pour chaque lithologie :

   - on modélise par des équations déterministes respectivement :

      a) la moyenne des processus de transport agissant de manière permanente et continue sur le long terme, par une équation de diffusion contrainte par un flux d'eau et par une disponibilité en sédiment réduite;
      b) la moyenne des processus de transport agissant de manière permanente et continue sur le court terme, par une équation de diffusion contrainte par un flux d'eau, par une disponibilité en sédiment réduite, et par une vitesse d'écoulement de l'eau;

c) la moyenne des processus de transport agissant de manière catastrophique sur le très court terme, par une équation de Newton ; et

- on détermine la stratigraphie résultante du bassin en tenant compte de la conservation des masses.

**2.** Méthode selon la revendication 1, **caractérisée en ce que,** à chaque pas de temps et pour chaque lithologie :

- on modélise les flux à long terme de sédiments transportés par l'eau en tenant compte d'un modèle de répartition des flux d'eau sur le bassin et de la capacité de transport des sédiments par de tels flux ;
- on modélise les flux à court terme de sédiments transportés par l'eau en utilisant un modèle exponentiel pour estimer la vitesse de l'eau ;
- on modélise les flux catastrophiques de sédiments transportés par l'eau dans des zones instables repérées en appliquant un critère de pente critique.

**3.** Méthode selon la revendication 1 ou 2, **caractérisée en ce que** l'on modélise les flux à long terme par la relation :

$$\overrightarrow{Q_{litho}} = \lambda \, \overrightarrow{Q_{max,\,litho}} = -\lambda \left( K_{gravité} + K_{fluviale} \, Q_{eau} \right) \overrightarrow{grad} \, z \, ,$$

où

- Qmax, litho est la capacité de transport de la lithologie "litho" en tout point du bassin ;
- Qeau, le flux d'eau s'écoulant à la surface du sol en ce point ;
- Kgravité, le coefficient de diffusion lié aux processus gravitaires permanents ;
- Kfluviale, le coefficient de diffusion lié au transport fluvial et océanique permanent ;
- z, l'altitude du sol en ce point ; et
- $\lambda$, un coefficient de pondération.

**4.** Méthode selon la revendication 1 ou 2, **caractérisée en ce que** l'on modélise les flux à court terme de sédiment transporté par l'eau en appliquant pour la vitesse de l'eau le modèle exponentiel :

$$U(M) = U_e + (U_o - U_e) \, e^{-\xi/L_e}$$

où Uo représente la vitesse au niveau d'un point de référence de l'écoulement, Ue, une vitesse d'équilibre de l'eau, et $\xi$, une distance le long de l'écoulement, les flux étant estimés par la relation :

$$\overrightarrow{Q_{max,\,litho}} = -\left( K_{gravité} + K_{fluviale} \, Q_{eau} \, P(U) \right) \overrightarrow{grad} \, z$$

avec

$$P(U) = \left( \frac{U^2 - U_{c,litho}^2}{U_e^2} \right)^{3/2} \quad si \quad U > U_{c,litho}$$

et

$$P(U) = 0 \quad si \quad U < U_{c,litho}$$

où P(U) est un coefficient pondérateur du modèle de vitesse, fonction de la vitesse U de l'écoulement, de la vitesse critique Uc,litho, à partir de laquelle chaque lithologie "litho" peut être transportée.

**Claims**

1. A method for realising a deterministic model of the diffusive type which permits simulation of the multi-lithological filling of a sedimentary basin, comprising, from known ground data relative to the architecture of the basin and to measurement data such as well log data or seismic data, building a set of input data relating to a space which is available as a result of subsidence and eustasy, to the supply of fluviatile or marine sediments and the transport thereof, and to physical parameters such as diffusion coefficients of the different lithologies, by means of an iterative process comprising gridding the basin into uniformly sized grid cells, modelling according to an explicit pattern in finite volumes with constant time intervals, in order to simulate the flow of each lithology deposited on each grid cell, comparing the results of the simulation with the ground data and modifying, by inversion and by increments, the input data, **characterised in that,** at each time interval and for each lithology:

    - the following are modelled, respectively, by deterministic equations:

        a) the mean value of the transport processes acting permanently and continually in the long term, by a diffusion equation constrained by a water flow and by a reduced availability of sediment;
        b) the mean value of the transport processes acting permanently and continually in the short term, by a diffusion equation constrained by a water flow, by a reduced availability of sediment, and by a water flow velocity;
        c) the mean value of the transport processes acting in a critical manner in the very short term, by a Newton equation; and

    - the resulting stratigraphy of the basin is determined, taking into account the conservation of masses.

2. The method according to Claim 1, **characterised in that,** at each time interval and for each lithology:

    - the long term flows of sediments transported by water are modelled, taking into account a distribution model of the water flows over the basin and the capacity of such flows for transporting the sediments;
    - the short term flows of sediments transported by water are modelled using an exponential model in order to estimate the water velocity;
    - the critical flows of sediments transported by water in located unstable areas are modelled by applying a criterion of critical slope.

3. The method according to Claim 1 or 2, **characterised in that** the long term flows are modelled by the relationship:

$$\overrightarrow{Q_{litho}} = \lambda \, \overrightarrow{Q_{max,\,litho}} = \lambda \left( K_{gravity} + K_{fluvial} \, Q_{water} \right) \overrightarrow{grad} \, z,$$

where

    - Qmax, litho is the capacity for transporting the lithology "litho" at any point of the basin;
    - Qwater, the flow of water flowing on the surface of the ground at that point;
    - Kgravity, the diffusion coefficient related to the permanent gravity processes;
    - Kfluvial, the diffusion coefficient related to the permanent fluvial and oceanic transport;
    - z, the altitude of the ground at that point; and
    - $\lambda$, a weighting coefficient.

4. The method according to Claim 1 or 2, **characterised in that** the short term flows of sediment transported by water are modelled by applying, to the water velocity, the exponential model:

$$U(M) = U_e + (U_0 - U_e) e^{-\xi/L_0}$$

where Uo represents the velocity at a point of reference of the flow, Ue, an equilibrium velocity of water, and $\xi$, a distance along the flow, whereby the flows are estimated by the relationship:

$$\vec{Q}_{max, litho} = - (K_{gravity} + K_{fluvial} Q_{water} P(U)) \vec{grad} z$$

with

$$P(U) = \left( \frac{U^2 - U^2_{c,litho}}{U^2_e} \right)^{3/2} \quad \text{if} \quad U > U_{c,litho}$$

and

$$P(U) = 0 \quad \text{if} \quad U < U_{c,litho}$$

where P(U) is a weighting coefficient of the model of velocity, as a function of the velocity U of the flow, of the critical velocity Uc,litho according to which each lithology "litho" can be transported.

**Patentansprüche**

1. Verfahren zur Herstellung eines deterministischen Modells vom Diffusionstyp, das die Simulation der multilitholigischen Füllung eines Sedimentationsbeckens erlaubt, umfassend, von bekannten Felddaten bezüglich der Architektur des Beckens und von Messdaten wie z. B. Bohrlochmessdaten oder seismischen Daten ausgehend, das Herstellen einer Gruppe von Eingangsdaten in Bezug auf einen Raum, der durch Absenkung und Eustasie verfügbar ist, auf die Anschwemmung von Fluss- oder Meeressedimenten und ihres Transports, und auf physikalische Parameter z. B. wie die Diffusionskoeffizienten der verschiedenen Lithologien, mithilfe eines iterativen Prozesses, umfassend die Aufteilung des Beckens in ein Gitternetz mit gleich großen Gitterzellen, die Modellierung nach einem expliziten Schema mit finiten Volumen und konstanten Zeitschritten, um die Strömung jeder Lithologie zu simulieren, die in jeder Gitterzelle vorliegt, einen Vergleich der Simulationsergebnisse mit Felddaten, und die Modifikation durch Inversion und nach und nach der Eingabedaten, **dadurch gekennzeichnet, dass** man in jedem Zeitschritt und für jede Lithologie:

   - durch deterministische Gleichungen jeweils modelliert:

   a) den Durchschnitt der Transportprozesse, die langfristig auf permanente und kontinuierliche Weise wirken, anhand einer Diffusionsgleichung, die durch eine Wasserströmung und durch eine reduzierte Sedimentverfügbarkeit eingeschränkt ist;
   b) den Durchschnitt der Transportprozesse, die kurzfristig auf permanente und kontinuierliche Weise wirken, anhand einer Diffusionsgleichung, die durch eine Wasserströmung, durch eine reduzierte Sedimentverfügbarkeit und eine Strömungsgeschwindigkeit des Wassers eingeschränkt ist;
   c) den Durchschnitt der Transportprozesse, die sehr kurzfristig auf katastrophale Weise wirken, anhand einer Newtonschen Gleichung; und

- die resultierende Stratigraphie des Beckens unter Berücksichtigung der Massenerhaltung bestimmt.

2. Verfahren nach Anspruch 1, **dadurch gekennzeichnet, dass** man in jedem Zeitschritt und für jede Lithologie:

    - die langfristigen Strömungen der vom Wasser transportierten Sedimente modelliert, unter Berücksichtigung eines Verteilungsmodells der Wasserströmungen im Becken und der Transportfähigkeit der Sedimente durch derartige Strömungen;
    - die kurzfristigen Strömungen der vom Wasser transportierten Sedimente modelliert, anhand eines exponentiellen Modells zur Schätzung der Geschwindigkeit des Wassers;
    - die katastrophalen Strömungen der vom Wasser transportierten Sedimente in den festgestellten instabilen Zonen modelliert, unter Anwendung eines kritischen Steilheitskriteriums.

3. Verfahren nach Anspruch 1 oder 2, **dadurch gekennzeichnet, dass** die langfristigen Strömungen anhand den folgenden Relation modelliert werden:

$$\overline{Q_{lithO}} = \overline{\lambda Q_{\max,litho}} = -\lambda \overline{\left(K_{gravite} + K_{fluviale} Q_{eau}\right)grad z} \ ,$$

wobei

    - $Q_{max,litho}$ die Transportfähigkeit der Lithologie "lith" an jedem Punkt des Beckens ist;
    - $Q_{eau}$ die Wasserströmung ist, die an diesem Punkt auf der Bodenfläche fließt;
    - $K_{gravite}$ der Diffusionskoeffizient ist, der mit permanenten gravitationellen Prozessen verbunden ist;
    - $K_{fluviale}$ der Diffusionskoeffizient ist, der mit dem permanenten Fluss- und Meerestransport verbunden ist;
    - z die Höhe des Bodens an diesem Punkt ist; und
    - $\lambda$ ein Gewichtungsfaktor ist.

4. Verfahren nach Anspruch 1 oder 2, **dadurch gekennzeichnet, dass** die kurzfristigen Strömungen der vom Wasser transportierten Sedimente modelliert werden, indem für die Geschwindigkeit des Wassers das folgende exponentielle Modell angewandt wird:

$$U(M) = U_e + \left(U_o - U_e\right)e^{-\xi/L_o}$$

wobei Uo die Geschwindigkeit an einem Bezugspunkt der Strömung, Ue eine Gleichgewichtsgeschwindigkeit des Wassers und $\xi$ eine Entfernung entlang der Strömung darstellt, wobei die Strömungen geschätzt werden durch die Relation:

$$\overline{Q_{\max,litho}} = -\overline{\left(K_{gravite} + K_{fluviale} Q_{eau} P(U)\right)grad z}$$

mit

$$P(U) = \left(\frac{U^2 - U_{C_{litho}}^2}{U_C^2}\right)^{3/2} \qquad\qquad \text{wenn} \quad U > U_{c_{litho}}$$

und

$$P(U) = 0 \qquad\qquad\qquad \text{wenn } \quad U < U_{c,litho}$$

wobei P(U) ein Gewichtungsfaktor des Geschwindigkeitsmodells ist, der von der Strömungsgeschwindigkeit U und der kritischen Geschwindigkeit Uc,litho abhängig ist, von der an jede Lithologie "litho" transportiert werden kann.

# FIG.1

Stratigraphie du Bassin au Temps T

Déformation du Bassin

*Subsidence Tectonique et Flexure*
*Eustatisme*
*Compaction*

Définition des Apports Sédimentaires

*Apports Clastiques aux Frontières du Bassin*
*Production Carbonatée au sein du Bassin*

Transport des Sédiments

1- Transport Long-Terme

*Transport permanent des Sédiments*
*(modèle diffusif sous contraintes)*

2- Transport Court-Terme

*Transport épisodique de Sédiment*
*(modèle diffusif sous contraintes, couplé à*
*un modèle exponentiel pour le calcul de la vitesse de l'eau)*

3- Transport Catastrophique

*Calcul des Zones Instables (pente critique)*
*Déstabilisation, Mouvement et Dépôt des zones instables*
*(équation de Newton avec un critère sur la vitesse d'écoulement)*

Conservation de la Masse

*Calcul de la nouvelle Stratigraphie à l'aide*
*du Principe de Conservation de la Masse*

Stratigraphie du Bassin au Temps T+dT

## FIG.2

Transport long-terme des sédiments

## FIG.3

Transport court-terme des sédiments

## FIG.4

Transport catastrophique des sédiments

## RÉFÉRENCES CITÉES DANS LA DESCRIPTION

**Documents brevets cités dans la description**

*   FR 2744224

**Littérature non-brevet citée dans la description**

*   **KENYON ; TURCOTTE.** Morphology of a delta prograding by bulk sediment transport. *Geol. Soc. Amer. Bull,* 1985, vol. 96, 1457-1465
*   **BEGIN, Z.B.** Application of a diffusion - erosion model to alluvial channels which degrade due to base-level lowering. *Earth Surface Processes and Landforms,* 1988, vol. 13, 487-500
*   **RIVENAES, J.C.** Application of a dual-lithology, depth dependent diffusion equation in stratigraphic simulation. *Basin Research,* 1988, vol. 4, 133-146
*   **PARASNIS, D.S.** The compaction of sédiments and its bearing on some geophysical problems. *Journal of the Royal Astronomical Society,* 1960, vol. 3 (1), 1-28
*   **LAWRENCE et al.** Stratigraphic simulation of sedimentary basins: concepts and calibration. *Amer. Assoc. Petrol. Geol. Bull,* 1990, vol. 74 (3), 273-295